**Europäisches Patentamt**

**European Patent Office**

**Office européen des brevets**

(19)

(11) Numéro de publication : **0 287 136 B1**

(12)                    **FASCICULE DE BREVET EUROPEEN**

(45) Date de publication du fascicule du brevet :
**05.06.91 Bulletin 91/23**

(51) Int. Cl.⁵ : **B01J 2/20**, C08J 9/26,
C02F 3/10, B01J 19/30,
C12M 1/16, B01J 2/22

(21) Numéro de dépôt : **88200384.1**

(22) Date de dépôt : **01.03.88**

(54) **Matériau granulaire de traitement d'eau et procédé de fabrication.**

(30) Priorité : **13.03.87 FR 8703611**

(43) Date de publication de la demande :
**19.10.88 Bulletin 88/42**

(45) Mention de la délivrance du brevet :
**05.06.91 Bulletin 91/23**

(84) Etats contractants désignés :
**AT BE CH DE ES FR GB GR IT LI LU NL SE**

(56) Documents cités :
**EP-A- 0 014 943**
**US-A- 3 476 844**
**US-A- 4 326 009**
**US-A- 4 383 956**

(73) Titulaire : **INSTITUT NATIONAL DES
SCIENCES APPLIQUEES DE TOULOUSE
(I.N.S.A.T.) ETABLISSEMENT PUBLIC A
CARACTERE SCIENTIFIQUE, CULTUREL ET
PROFESSIONNEL Avenue de Rangueil
F-31077 Toulouse Cédex (FR)**

(72) Inventeur : **Capdeville, Bernard
61, rue Bonnat
F-31400 Toulouse (FR)**
Inventeur : **Aurelle, Yves
113, rue de Fronton
F-31140 Aucamville (FR)**
Inventeur : **Roustan, Michel
Le parc de Ramonville Bât 1
F-31520 Ramonville Saint Agne (FR)**
Inventeur : **Roques, Henri
6, rue Renoir
F-31120 Portet Sur Garonne (FR)**

(74) Mandataire : **Barre, Philippe
Cabinet Barre-Gatti-Laforgue 95 rue des
Amidonniers
F-31069 Toulouse Cédex (FR)**

EP 0 287 136 B1

## Description

L'invention concerne un procédé de fabrication d'un matériau granulaire de traitement d'eau. Elle vise à obtenir un matériau spécifiquement adapté au mode de traitement d'eau auquel ledit matériau est destiné. En particulier, elle s'applique pour la fabrication d'un matériau granulaire de traitement biologique (dit à micro-organismes fixés ou à biomasse fixée) ou de traitement physicochimique (filtration en lit à pénétration). Elle s'étend à un nouveau matériau granulaire susceptible d'être fabriqué par ledit procédé.

Par "traitement d'eau", on entend aussi bien le traitement des eaux en vue de les rendre potables que l'épuration d'eaux ou d'effluents aqueux résiduaires.

De façon traditionnelle, les traitements d'eau utilisent des matériaux granulaires naturels tels que sables, argiles expansées ou non, charbons actifs reconstitués ou pas, et autres produits minéraux. Ces matériaux sont choisis en fonction du traitement envisagé, en vue de fixer les micro-organismes dans le cas des traitements biologiques ou de piéger physiquement les matières en suspension dans le cas des traitements par filtration. L'intérêt de ces matériaux est lié à leur disponibilité et à leur faible coût, mais ils sont mal adaptés à ces traitements et les procédés de mise en oeuvre sont peu fiables et peu performants, notamment pour les traitements biologiques à biomasse fixée.

Par ailleurs, le brevet FR-A-2545098 (FR 83.07186) décrit un matériau composite pour des traitements biologiques ; ce matériau est constitué par des matrices thermoplastiques de forme notamment cylindrique, en surface desquelles ont été fixées des particules adsorbantes de charbon actif. Ce matériau possède sensiblement les mêmes propriétés de fixation des micro-organismes que le charbon actif, mais s'en différencie par une meilleure résistance mécanique. Toutefois, ce matériau demeure sensible aux phénomènes d'attrition et n'est adapté qu'à seul type de traitement biologique, à savoir traitement en lit fixe, immergé ou à ruissellement ; il est à noter que, par expansion de la matrice synthétique, il est possible de moduler la densité du matériau, cependant cette expansion est très difficile en pratique à contrôler et la taille des particules est liée au degré d'expansion et donc n'est pas ajustable indépendamment de la densité. De plus, un tel matériau se prête mal aux opérations de lavage en vue de l'élimination de la biomasse fixée.

La présente invention se propose de fournir un nouveau matériau de traitement d'eau, présentant des propriétés de volume et de surface, améliorées par rapport aux matériaux existants.

Un objectif de l'invention est d'indiquer un procédé de fabrication d'un tel matériau granulaire permettant d'en ajuster les caractéristiques en fonction du mode de mise en oeuvre prévu, de façon que le matériau puisse être optimisé sur le plan hydrodynamique et des transferts de matière.

En particulier, l'invention vise à permettre d'effectuer des traitements d'eau, aussi bien en lit fixe qu'en lit turbulent ou lit fluidisé.

Un autre objectif est d'améliorer l'efficacité du matériau par rapport aux matériaux connus : efficacité de fixation des micro-organismes dans le cas des traitements biologiques, efficacité de rétention physicochimique dans le cas des filtrations.

Un autre objectif est de fournir un matériau se prêtant à des lavages ou nettoyages faciles et économiques.

Un autre objectif est de fournir un matériau présentant des propriétés mécaniques encore améliorées par rapport au matériau composite au charbon actif sus-évoqué, rendant en particulier ledit matériau insensible aux phénomènes d'attrition.

Le procédé visé par l'invention en vue de la fabrication d'un matériau granulaire de traitement d'eau permet d'obtenir des granulés sphéroïdes de densité −d− et de taille −t− ajustables indépendamment dans des plages respectives $1 < d \leqslant 3$ et $0,5 \text{ mm} \leqslant t \leqslant 10$ mm, en vue de permettre d'adapter lesdits granulés au type de traitement concerné ; à cet effet, le procédé de fabrication conforme à l'invention consiste :

- à mélanger une résine thermoplastique oxydable, de densité −dr− inférieure à −d−, avec un adjuvant se présentant sous forme de poudre de granulométrie inférieure à environ 200 microns et de densité −da− telle que $da > 1,7d-0,7dr$, le mélange étant réalisé de façon que le rapport pondéral d'adjuvant pa dans le mélange soit tel que

$$pa = \frac{da(d - dr)}{d(da - dr)}$$

- à chauffer le mélange pour le rendre plastique,
- à extruder ledit mélange plastique à travers une filière de façon à produire des joncs plastiques de diamètre légèrement supérieur à t,
- à tronçonner, immédiatement à la sortie de la filière, les joncs pour obtenir des tronçons plastiques de longueur sensiblement égale au diamètre,
- à assurer un trempage desdits tronçons plastiques de façon à engendrer, par l'effet du refroidissement et des retraits, un perlage desdits tronçons leur conférant la forme de granulés sphéroïdes,
- à réaliser une oxydation desdits granulés sphéroïdes, adaptée pour créer des sites hydrophiles à leur surface, en vue de donner auxdits granulés une mouillabilité préférentielle à l'eau par rapport à l'air.

Par "adjuvant", on entend aussi bien une poudre d'un composé unique qu'un mélange de poudres, la densité considérée −da− de l'adjuvant étant, dans ce dernier cas, la densité moyenne dudit mélange.

La résine thermoplastique oxydable peut être choisie de façon connue en soi parmi les familles suivantes : résines polyoléfines, résines polystyréniques, résines polysulfones, résines polyvinyliques, résines polyamides, la résine utilisée étant un polymère ou un copolymère de ces familles possédant des doubles liaisons libres oxydables.

Le procédé de l'invention conduit à une matrice continue dans laquelle sont dispersés de façon homogène les grains d'adjuvants, de sorte que chaque granulé possède une bonne résistance mécanique liée à la nature de la résine de base utilisée.

Le procédé de l'invention permet un ajustement indépendant des deux paramètres de volume (densité, taille des granulés) conditionnant l'hydrodynamique et les transferts de matière dans les procédés de traitement des eaux. Dans le cas des traitements biologiques à microorganismes fixés, la taille des granulés sera choisie de façon que le film biologique qui se forme autour de chaque granulé demeure d'épaisseur faible par rapport à la taille dudit granulé, de sorte que la densité résultante de la bioparticule soit stable (relargage du film affectant très peu la densité de la bioparticule). On supprime ainsi les modifications brusques de densité préjudiciables à l'hydrodynamique du réacteur ainsi que les risques d'entraînement de particules très chargées (enrobage très volumineux). La densité du matériau est choisie de façon à optimiser la mise en oeuvre du procédé choisi : énergie nécessaire à la phase de lavage minimisée dans le cas des procédés en lit fixe, énergie de fluidisation ou de mise en suspension minimisée dans le cas des lits fluidisés ou lits turbulents.

De préférence, l'adjuvant sera choisi de granulométrie à spectre étroit, comprise entre 10 et 100 microns, et de densité –da– telle que 2,2d-1,2dr ≤ da ≤ 50d-49dr. Ce choix paraît optimiser dans la généralité des cas les qualités de résistance des granulés, tout en autorisant l'ajustement de densité sus-évoqué indépendamment de la taille desdits granulés. Par "granulométrie à spectre étroit", on entend une granulométrie pour laquelle la taille des grains les plus gros ou les plus petits ne diffèrent pas de plus de 100% de celle des grains de taille moyenne.

En outre, la forme sphéroïde des granulés à laquelle conduit le procédé minimise les interactions entre particules, évite les effets de floculation interparticulaire et permet de conserver un lit homogène très favorable à un bon transfert de matière (absence de cheminement préférentiel).

De plus, les propriétés de surface liées à la mouillabilité du matériau assurent une bonne interaction entre le matériau et l'eau à traiter et évite, dans le cas des réacteurs triphasiques (lit solide de granulés, phase aqueuse liquide à traiter et phase gazeuse : air, gaz de fermentation, azote...) une interaction gaz-/solide, supprimant ainsi les phénomènes de flottation des granulés et les risques de floculation entre particules (par piégeage des bulles de gaz).

L'oxydation des granulés peut être réalisée par tout procédé connu et en particulier par une mise en contact des granulés avec un mélange sulfochromique (acide sulfurique, bichromate de potassium et eau) ou avec un mélange sulfonant d'oléum (acide sulfurique fumant). Bien entendu, d'autres procédés tels que l'ozonation peuvent être utilisés.

De préférence, l'oxydation des granulés est conduite jusqu'à un degré d'oxydation correspondant à une hydrophilie caractérisée par un angle de contact du matériau vis-à-vis de l'eau en présence d'air inférieur à 40°. Les granulés ainsi obtenus assurent une excellente interaction avec l'eau à traiter et, le cas échéant, se prêtent parfaitement à l'exécution d'un traitement final complémentaire tel que décrit ci-après, qui améliore encore cette interaction.

Selon un mode de mise en oeuvre préférentiel, le procédé est complété par un traitement final des granulés sphéroïdes, consistant à greffer par voie ionique un polyélectrolyte de type cationique à la surface desdits granulés. Ce traitement final peut notamment être effectué en mettant les granulés au contact d'une solution aqueuse contenant un polyélectrolyte du groupe suivant : chlorhydrate de polyéthylène-iminés, chlorhydrate de polyvinyl-ammonium, polychlorure d'aluminium. Cette mise en contact peut être assurée par tout processus, notamment par immersion dans une colonne à travers laquelle circule la solution aqueuse.

Ce traitement final présente l'avantage de neutraliser les sites hydrophiles négatifs dus à l'oxydation et de créer, à partir de chacun de ceux-ci, de nombreux sites hydrophiles cationiques très favorables, d'une part, à la fixation des micro-organismes qui sont en général chargés négativement, d'autre part, à l'adsorption (par chimisorption) des matières en suspension colloïdales qui présentent également des charges de surface négatives, ce qui représente un avantage essentiel en filtration. De plus, ce traitement final accentue l'hydrophilie du matériau (chaque site anionique étant remplacé par plusieurs sites cationiques) et les avantages sus-évoqués relatifs aux interactions des phases solide/liquide/gaz sont renforcés.

Par ailleurs, le procédé conforme à l'invention se prête à la création de microporosités superficielles à la surface des granulés, en vue de favoriser la cinétique de colonisation des micro-organismes dans le cas des traitements biologiques (phase de latence plus courte).

Un premier mode de mise en oeuvre pour obtenir ces microporosités superficielles consiste à choisir un adjuvant constitué par un sel minéral soluble dans l'eau (chlorure de calcium, sulfate de fer, bicarbonate de sodium, etc...), en vue de créer lesdites microporosités par solubilisation des grains de ce sel situés en surface lors d'une mise en contact ultérieure avec une phase aqueuse. Cette mise en contact peut être assurée, soit lors de la phase de trempage effectuée dans un bain aqueux froid, soit au cours d'une opération spéciale d'immersion dans de l'eau avant la phase d'oxydation. La dissolution des grains d'adjuvant situés en surface des granulés fait apparaître une multitude de micro-alvéoles, augmentant notablement la cinétique des traitements biologiques.

Un autre mode de mise en oeuvre consiste à choisir un adjuvant constitué par un produit insoluble dans l'eau, susceptible d'être attaqué chimiquement et à soumettre les granulés à un traitement chimique superficiel, apte à attaquer ledit adjuvant en vue de créer une micro-porosité en surface.

Dans ce dernier cas, on peut notamment choisir comme adjuvant du carbonate de calcium ou un silicate et soumettre les granulés à une attaque acide qui solubilise en surface les grains de ces sels, faisant apparaître comme précédemment une multitude de micro-alvéoles.

L'invention s'étend, en tant que tel, à un matériau granulaire, ayant les caractéristiques physico-chimiques du matériau obtenu par le procédé défini précédemment ; ce matériau se caractérise en ce qu'il se présente sous la forme de granulés sphéroïdes de densité –d– et de taille –t–, telles que $1 < d \leq 3$ et $0,5 \, \text{mm} \leq t \leq 10 \, \text{mm}$, et en ce que :
  • chaque granulé sphéroïde est composé d'une matrice polymérique thermoplastique et d'un adjuvant plus dense sous forme de micrograins dispersés dans ladite matrice,
  • chaque granulé possède en surface une porosité sous la forme de micro-alvéoles, chacune de dimension correspondant à celle d'au moins un micrograin d'adjuvant,
  • chaque granulé possède des sites hydrophiles cationiques répartis sur sa surface et dans les micro-alvéoles.

Il est à noter que, – contrairement au matériau composite du brevet FR-A 2545098 (FR n° 83.07186) très sensible à l'attrition qui a tendance à faire disparaître le charbon actif en surface, – chaque granulé du matériau conforme à l'invention présente une peau continue, superficiellement alvéolée, mais sans particules fragiles en saillie, ce qui limite considérablement l'effet des phénomènes d'attrition sur les granulés.

Le matériau granulaire conforme à l'invention peut être utilisé pour réaliser des traitements biologiques d'eau ou des traitements physico-chimiques.

Dans le cas d'un traitement biologique appelé à être mis en oeuvre en lit fluidisé, la densité –d– et la taille –t– des granulés seront respectivement ajustées dans les plages suivantes, qui sont plus spécifiquement adaptées à ce mode de traitement :

$$1,05 \leq d \leq 1,2 \text{ et } 1,5 \, \text{mm} \leq t \leq 3 \, \text{mm}.$$

Dans le cas d'un traitement biologique s'opérant par mise en suspension du granulé dans la phase aqueuse (lit turbulent), la densité –d– et la taille –t– seront respectivement ajustées dans les plages suivantes :

$$1,01 \leq d \leq 1,05 \text{ et } 1,5 \, \text{mm} \leq t \leq 3 \, \text{mm}.$$

Dans le cas d'un traitement biologique appelé à être mis en oeuvre en lit fixe immergé, la densité –d– et la taille –t– seront respectivement ajustées de sorte que :

$$d \geq 1,1 \text{ et } t \geq 3 \, \text{mm}.$$

Dans le cas d'une filtration d'eau en lit fixe à pénétration, la densité –d– et la taille –t– seront respectivement ajustées de sorte que :

$$d \geq 1,1 \text{ et } 0,5 \, \text{mm} \leq t \leq 3 \, \text{mm}.$$

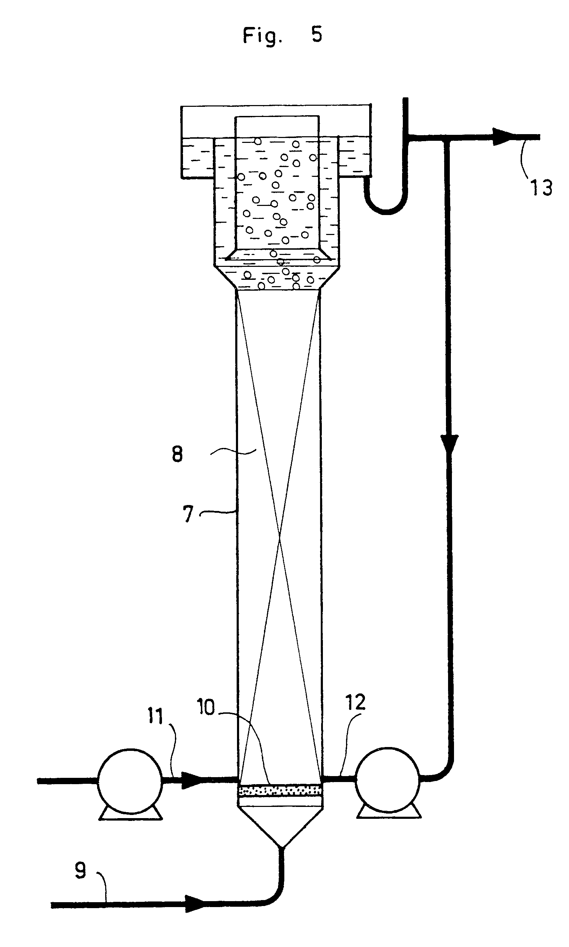

L'invention est illustrée ci-après par des exemples de fabrication et des exemples de mise en oeuvre, la mise en oeuvre du matériau ayant été faite dans un dispositif en lui-même connu tel que schématisé à la figure 5 des dessins ; sur ces dessins :
  – les figures 1, 2, 3 et 4 illustrent, à échelle très dilatée, un granulé de matériau à l'issue des différentes étapes du procédé de fabrication,
  – la figure 5 est une coupe schématique d'un réacteur triphasique à lit fluidisé ayant servi à la mise en oeuvre du matériau.

## EXEMPLE DE FABRICATION

Le matériau granulaire que l'on se propose de fabriquer dans le présent exemple est destiné à des traitements biologiques en lit fluidisé d'eaux usées résiduaires urbaines.

Dans cette application, la taille –t– de chaque granulé du matériau, qui est choisie pour minimiser dans ladite application l'énergie de fluidisation et conserver un film biologique toujours très mince autour des granulés, est de 2,7 mm. La densité –d– qui contribue à conditionner les conditions hydrodynamiques de fluidisation, a été choisie à d = 1,19.

Pour obtenir un matériau granulaire adapté à un tel traitement biologique en lit fluidisé, l'on mélange une poudre de résine thermoplastique constituée par du polyéthylène haute densité, avec un adjuvant constitué par du carbonate de calcium (insoluble dans l'eau) se présentant sous forme de poudre. La poudre de résine possède une granulométrie de l'ordre de quelques centaines de microns et une densité dr de 0,96, cependant que l'adjuvant possède une granulométrie moyenne égale à 30 microns, le spectre de granulométrie de cet adjuvant se situant entre 10 et 50 microns. La densité –da– de l'adjuvant est de 2,7.

Cet adjuvant a été en particulier choisi du fait que sa densité –da– très supérieure à celle de la résine, satisfait la relation :

$$2,2d-1,2dr \leq da \leq 50d-49dr,$$

soit dans l'exemple : $1,46 \leq da \leq 12,46$.

Cette relation optimise le rapport pondéral d'adjuvant à insérer dans la résine qui est calculé par la relation : $pa = \dfrac{da(d - dr)}{d(da - dr)}$

en attribuant à ce pourcentage une valeur telle que, à la fois, la résine soit en quantité suffisante pour constituer une matrice continue et l'adjuvant soit en quantité suffisante pour créer en surface une microporosité suffisante comme évoqué plus loin.

Le pourcentage pondéral d'adjuvant calculé par la formule sus-évoquée est en l'exemple égal à pa = 0,3.

Après mélange homogène des deux poudres dans cette proportion pondérale (30% d'adjuvant, 70% de résine), l'ensemble est introduit dans une trémie d'extrudeuse et est amené à circuler au moyen d'une vis sans fin dans un corps de chauffe qui le porte à une température de 200°C. Cette extrudeuse, de type traditionnel, est équipée en sortie d'une filière ayant des trous d'extrusion cylindrique d'un diamètre de 2,8 mm.

Après le corps de chauffe, en aval de la filière, la résine se présente sous la forme d'une pâte plastique entraînant les micrograins d'adjuvant. A la sortie de la filière, cette pâte forme des joncs plastiques cylindriques qui sont tronçonnés à des longueurs de 2,8 mm.

Les tronçons plastiques ainsi obtenus tombent dans un bain d'eau froide qui provoque, par l'effet du refroidissement et du retrait, un perlage conférant aux granulés une forme sphéroïde de diamètre moyen égal à 2,7 mm. La densité mesurée de ces granulés est de 1,19.

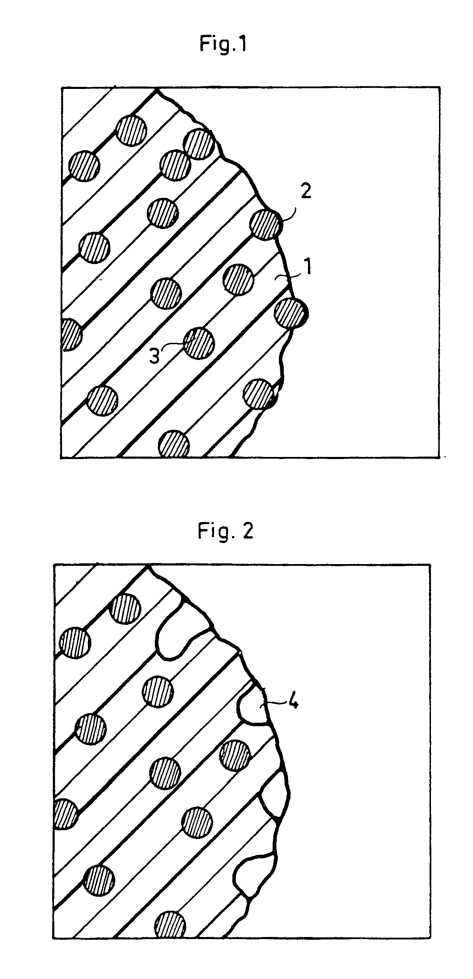

La figure 1 illustre, en vue partielle et à échelle très dilatée, un granulé, avec sa matrice plastique 1 et ses micrograins d'adjuvant répartis soit en surface 2 soit au coeur de la matrice 3.

Les granulés sphéroïdes ainsi obtenus sont immergés dans un bain aqueux acide, contenant 30% en poids d'acide chlorhydrique. Les granulés sont laissés une demi-journée dans ce bain, puis sont lavés à l'eau.

Les granulés obtenus, observés au microscope, ont l'allure illustrée à la figure 2 : les micrograins de surface 2 ont été dissous par une transformation en bicarbonate de calcium et solubilisés dans l'eau. Ils ont laissé place à des micro-alvéoles telles que schématisées en 4. Les micrograins internes 3 sont restés intacts.

L'étape suivante du procédé consiste à oxyder les granulés au moyen d'un mélange sulfochromique composé d'acide sulfurique (93% en poids), de bichromate de potassium (1% en poids) et d'eau. Les granulés sont laissés environ trois heures dans le bain, puis sont lavés dans une solution aqueuse.

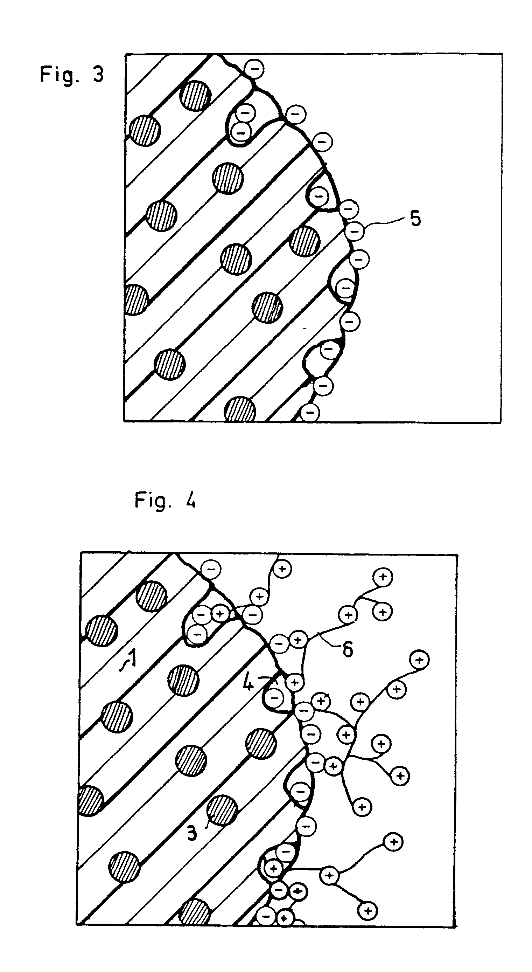

La figure 3 illustre la structure des granulés obtenus qui comportent des sites hydrophiles anioniques tels que 5, répartis sur la surface du granulé et dans les micro-alvéoles. La présence de ces sites est constatée par le caractère du composé préférentiellement mouillable à l'eau par rapport à l'air. L'angle de contact mesuré était, dans ce cas, proche de 0° (étalement total de la goutte d'eau).

L'étape finale du procédé consiste à greffer sur les sites anioniques créés à l'étape précédente un polyélectrolyte minéral constitué par un polychlorure d'aluminium (polyélectrolyte "WAC" fabriqué par "ATOCHEM").

Le polychlorure d'aluminium se présente sous forme d'une solution comportant 1200 g de polyélectrolyte par litre. Cette solution est ramenée, par dilution dans de l'eau déionisée, à une concentration de 1 g par litre. Les granulés sont immergés dans cette dernière solution pendant trois heures. A la sortie du bain, un lavage aqueux est effectué.

On a illustré à la figure 4 un granulé après ce traitement au polyélectrolyte. Chaque site anionique a fixé par chimisorption une chaîne de polyélectrolyte, de sorte que les granulés ainsi traités possèdent une grand nombre de sites hydrophiles cationiques répartis sur leur surface.

Ces sites cationiques peuvent être mis en évidence en colorant les granulés au moyen d'un colorant anionique du type rouge de phénol : l'on constate une coloration rouge uniforme autour du grain, montrant les fixations ioniques du colorant sur les sites cationiques du matériau.

MISE EN OEUVRE DU MATERIAU

Les granulés ainsi fabriqués sont disposés dans un bioréacteur 7 tel que schématisé à la figure 5, se présentant sous la forme d'une colonne verticale contenant un lit expansable 8. A sa base, le réacteur est alimenté par de l'aire par un conduit 9, à travers un distributeur de fluidisation 10.

L'eau urbaine à traiter est introduite par un conduit 11 au-dessus du distributeur et une recirculation de l'eau traitée est assurée de façon traditionnelle par un conduit 12 en vue d'obtenir une expansion du lit à des niveaux appropriés. L'eau traitée est récupérée par surverse à travers un conduit 13.

L'on constate qu'au terme de longues périodes de fonctionnement, aucun entraînement du matériau granulaire ne se produit, les bulles d'air sortant en tête de la colonne, libres de tout granulé. L'interface supérieure solide/liquide est parfaitement nette et définie.

A l'entrée, les eaux résiduaires introduites par le conduit 11 ont les caractéristiques suivantes, en pollution :

D.T.O. (demande totale en oxygène) : 420 mg $O_2$-

/litre

C.O.T. (carbone organique total) : 150 mg/l

Le temps de passage de l'eau est de 35 mn et la vitesse de l'air 12 m/heure. Le débit liquide est de 10 l/heure. Ces paramètres correspondent à une charge organique appliquée par m³ de réacteur et par jour, de :

D.T.O. : 12,6 kg/m³.jour

C.O.T. : 4,7 kg/m³.jour

Après la période de mise en régime, l'analyse des eaux traitées a fourni les données suivantes :

D.T.O. : 25 mg $O_2$/l

C.O.T. : 9 mg/l

ce qui correspond à des charges organiques éliminées par m³ de réacteur et par jour, de :

D.T.O. : 11, 8 kg/m³.jour

C.O.T. : 4,4 kg/m³.jour

Le rendement moyen de dépollution aussi bien en D.T.O. qu'en C.O.T. est de 94%, ce qui est remarquable.

La production de boue obtenue lors de ces essais (récupérée dans un décanteur secondaire) est de 0,48 kg de matière sèche totale/kg de D.T.O. éliminée ou de 1,2 kg de M.S.T. par kg de C.O.T. éliminé.

Ces excellentes performances sont dues aux excellentes conditions hydrodynamiques, engendrées par le matériau qui assure un transfert d'oxygène remarquable, dû à une bonne stabilité du lit fluidisé et à une fixation très favorable des microorganismes sur les granulés par film mince (sans modification des conditions hydrodynamiques de fluidisation au cours du temps).

Dans une installation similaire, sont effectués des essais comparatifs de transfert d'oxygène entre plusieurs matériaux traditionnels : sable (granulométrie 0,3 mm), grenat (granulométrie 0,380 mm), pierre ponce (granulométrie 0,3 mm) et le matériau conforme à l'invention tel que décrit précédemment (2,7 mm). La fluidisation est menée dans tous les cas de façon à effectuer une expansion totale du lit de l'ordre de 2,5 fois la hauteur initiale de matériaux. Les granulométries des matériaux classiques ont été choisies de façon à obtenir une fluidisation dans de bonnes conditions avec des énergies comparables.

Le paramètre comparé après ces essais est le rapport du coefficient de transfert d'oxygène de la colonne garnie, au coefficient de transfert d'oxygène de la colonne à bulles non garnie. La valeur de ces coefficients caractérise l'influence du matériau sur le transfert d'oxygène. Les résultats obtenus sont les suivants :

– sable : 0,47

– grenat : 0,46

– pierre ponce : 0,42

– matériau granulaire conforme à l'invention : 1.

En conséquence, dans le cas de l'invention, le matériau ne modifie pas le comportement de la dispersion gaz/liquide, alors que dans les matériaux traditionnels, les bulles coalescent entre elles et abaissent de plus de moitié les quantités d'oxygène transférées. De plus, avec les matériaux traditionnels, on constate des phénomènes de déplacement des interfaces solide/liquide en présence des bulles d'air, créant une instabilité hydrodynamique.

Ainsi, le matériau granulaire conforme à l'invention permet une fixation très efficace des microorganismes, sous forme de films minces très denses en microorganismes actifs, sans modification sensible de l'hydrodynamique au cours du temps.

## Revendications

1. Procédé de fabrication d'un matériau granulaire de traitement d'eau, permettant d'obtenir des granulés de densité –d– et de taille –t– ajustables indépendamment dans des plages respectives $1 < d \leq 3$ et $0,5 \, mm \leq t \leq 10 \, mm$, en vue de permettre d'adapter lesdits granulés au type de traitement auquel ledit matériau est destiné,

ledit procédé de fabrication étant caractérisé en ce qu'il consiste :

- à mélanger une résine thermoplastique oxydable, de densité –dr– inférieure à –d–, avec un adjuvant se présentant sous forme de poudre de granulométrie inférieure à 200 microns et de densité –da– telles que da > 1,7d-0,7dr, le mélange étant réalisé de façon que le rapport pondéral d'adjuvant pa dans le mélange soit tel que pa =

$$\frac{da(d - dr)}{d(da - dr)}$$

- à chauffer le mélange pour le rendre plastique,
- à extruder ledit mélange plastique à travers une filière de façon à produire des joncs plastiques de diamètre légèrement supérieur à t,
- à tronçonner, immédiatement à la sortie de la filière, les joncs pour obtenir des tronçons plastiques de longueur sensiblement égale au diamètre,
- à assurer un trempage desdits tronçons plastiques de façon à engendrer, par l'effet du refroidissement et des retraits, un perlage desdits tronçons leur conférant la forme de granulés sphéroïdes,
- à réaliser une oxydation desdits granulés sphéroïdes, adaptée pour créer des sites hydrophiles à leur surface, en vue de donner auxdits granulés un mouillabilité préférentielle à l'eau par rapport à l'air.

2. Procédé selon la revendication 1, caractérisé en ce que l'on soumet les granulés sphéroïdes à un traitement final consistant à greffer par voie ionique un polyélectrolyte de type cationique à la surface desdits granulés.

3. Procédé selon la revendication 2, caractérisé en ce que le traitement final consiste à mettre les granulés au contact d'une solution aqueuse contenant un polyélectrolyte du groupe suivant : chlorhydrate de polyéthylène-iminés, chlorhydrate de polyvinyl-ammonium, polychlorure d'aluminium.

4. Procédé selon l'une des revendications 1, 2 ou 3, dans lequel la résine thermoplastique oxydable est choisie parmi les familles suivantes : résines polyoléfines, résines polystyrèniques, résines polysulfones, résines polyvinyliques, résines polyamides, la résine utilisée étant un polymère ou un copolymère de ces familles possédant des doubles liaisons libres oxydables.

5. Procédé selon l'une des revendications 1, 2, 3 ou 4, caractérisé en ce que l'on choisit un adjuvant constitué par un sel minéral soluble dans l'eau, en vue de créer une microporosité superficielle des granulés par solubilisation des grains de ce sel situés en surface lors d'une mise en contact ultérieure avec une phase aqueuse.

6. Procédé selon l'une des revendications 1, 2, 3 ou 4, caractérisé en ce que l'on choisit un adjuvant constitué par un produit insoluble dans l'eau, susceptible d'être attaqué chimiquement, et en ce que l'on soumet les granulés à un traitement chimique superficiel apte à attaquer ledit adjuvant en vue de créer une microporosité en surface.

7. Procédé selon la revendication 6, caractérisé en ce que l'on choisit comme adjuvant du carbonate de calcium ou un silicate et en ce que l'on soumet les granulés à une attaque acide.

8. Procédé selon l'une des revendications 1, 2, 3, 4, 5, 6 ou 7, dans lequel l'oxydation des granulés est conduite jusqu'à un degré d'oxydation correspondant à une hydrophilie caractérisée par un angle de contact du matériau vis-à-vis de l'eau en présence d'air inférieur à 40°.

9. Procédé selon la revendication 8, caractérisé en ce que l'oxydation en surface consiste à mettre en contact les granulés avec un mélange sulfochromique ou un mélange sulfonat d'oléum.

10. Procédé selon l'une des revendications 1 à 9, caractérisé en ce que l'adjuvant est choisi de granulométrie à spectre étroit, comprise entre 10 et 100 microns, et de densité –da– telles que :

$$2,2d-1,2dr \leqq da \leqq 50d-49dr.$$

11. Procédé selon la revendication 1, pour la fabrication d'un matériau granulaire en vue d'un traitement biologique ou physicochimique d'eau, dans lequel :

• l'adjuvant est choisi conformément à l'une des revendications 5, 6 ou 7, les granulés étant ensuite mis en contact avec une phase aqueuse ou soumis à une attaque acide en vue de créer la microporosité superficielle précitée,

• l'oxydation en surface conforme à l'une des revendications 8 ou 9 est effectuée après obtention de ladite microporosité,

• le traitement final de greffage ionique conforme à l'une des revendications 2 ou 3 est effectué après oxydation.

12. Procédé selon la revendication 11, pour la fabrication d'un matériau granulaire en vue d'un traitement biologique en lit fluidisé, dans lequel l'on ajuste la densité –d– et la taille –t– des granulés respectivement dans les plages suivantes :

$$1,05 \leqq d \leqq 1,2 \text{ et } 1,5 \text{ mm} \leqq t \leqq 3 \text{ mm.}$$

13. Procédé selon la revendication 11, pour la fabrication d'un matériau granulaire en vue d'un traitement biologique s'opérant par mise en suspension du granulé dans la phase aqueuse, dans lequel l'on ajuste la densité –d– et la taille –t– des granulés respectivement dans les plages suivantes :

$$1,01 \leqq d \leqq 1,05 \text{ et } 1,5 \text{ mm} \leqq t \leqq 3 \text{ mm.}$$

14. Procédé selon la revendication 11, pour la fabrication d'un matériau granulaire en vue d'un traitement biologique en lit fixe immergé, dans lequel l'on ajuste la densité –d– et la taille –t– des granulés respectivement de sorte que :

$$d > 1,1 \text{ et } t \geqq 3 \text{ mm.}$$

15. Procédé selon la revendication 11, pour la fabrication d'un matériau granulaire en vue d'une filtration d'eau en lit fixe à pénétration, dans lequel l'on ajuste la densité –d– et la taille –t– des granulés respectivement de sorte que :

$$d \geqq 1,1 \text{ et } 0,5 \text{ mm} \leqq t \leqq 3 \text{ mm.}$$

16. Matériau granulaire de traitement d'eau se présentant sous la forme de granulés sphéroïdes, de densité –d– et de taille –t– telles que $1 < d \leqq 3$ et $0,5 \text{ mm} \leqq t < 10 \text{ mm}$, dans lequel :

• chaque granulé sphéroïde est composé d'une matrice polymérique thermoplastique (1) et d'un adjuvant plus dense sous forme de micrograins (3) dispersés dans ladite matrice,

• chaque granulé possède en surface une porosité sous la forme de micro-alvéoles (4), chacune de dimension correspondant à celle d'au moins un micrograin d'adjuvant,

• chaque granulé possède des sites hydrophiles cationiques (6) répartis sur sa surface.

## Ansprüche

1. Verfahren zur Herstellung eines körnigen Materials zur Behandlung von Wasser, mit dem sich Granulate einer Dichte -d- und einer Größe –t– erzielen lassen, die unabhängig in den jeweiligen Bereichen $1 < d \leq 3$ und $0,5$ mm $\leq t \leq 10$ mm einstellbar sind, und zwar im Hinblick auf das Ermöglichen einer Anpassung der vorerwähnten Granulate an den Behandlungstyp, für den das vorerwähnte Material bestimmt ist,
wobei das vorerwähnte Herstellungsverfahren dadurch gekennzeichnet ist, daß es in folgendem besteht :

- Vermischen eines oxydierbaren thermoplastischen Kunstharzes einer Dichte –dr– von weniger als –d–, mit einem pulverförmigen Zusatzstoff einer Korngröße von weniger als 200 Mikron und einer Dichte –da– wie da > 1,7d-0,7dr, wobei das Gemisch so hergestellt wird, daß das Gewichtsverhältnis an Zusatzstoff pa im Gemisch

$$pa = \frac{da(d - dr)}{d(da - dr)} \text{ entspricht ;}$$

- Erhitzen des Gemischs um es plastisch zu gestalten ;
- Strangpressen des vorerwähnten Gemischs durch ein Extrudermundstück so, daß Plastikstangen erzeugt werden, deren Durchmesser t leicht überschreitet ;
- Ablängen der Stangen beim Austreten aus dem Extrudermundstück auf Plastikstücklängen, die in etwa dem Durchmesser entsprechen ;
- Bewerkstelligen einer Wässerung der vorerwähnten Plastikstücke so, daß unter der Auswirkung der Abkühlung und der Schrumpfungen, eine Schmelzperlenbildung den vorerwähnten Stücken die Gestalt kugelförmiger Granulate verleiht ;
- Herbeiführen einer Oxydation der vorerwähnten kugelförmigen Granulate, wobei diese so ausgelegt ist, daß wasseranziehende Stellen an ihrer Oberfläche im Hinblick darauf geschaffen werden, den vorerwähnten Granulaten eine vorzugsweise Benetzbarkeit für Wasser im Vergleich zur Luft zu verleihen.

2. Verfahren gemäß An spruch 1, dadurch gekennzeichnet, daß man die kugelförmigen Granulate einer abschließenden Behandlung unterzieht, die darin besteht, auf ionischem Wege einen Polyelektrolyten des kationischen Typs in die Oberfläche der vorerwähnten Granulate einzupflanzen.

3. Verfahren gemäß Anspruch 2, dadurch gekennzeichnet, daß die abschließende Behandlung darin besteht, die Granulate in Berührung mit einer wäßrigen Lösung zu bringen, die einen Polyelektrolyten der folgenden Gruppe enthält : Imino-Polyäthylen-Hydrochlorid,
Ammonium-Polyvinyl-Hydrochlorid, Aluminiumpolychlorid.

4. Verfahren gemäß einem der Ansprüche 1, 2 oder 3, bei dem man das oxydierbare thermoplastische Kunstharz aus den folgenden Familien wählt, Polyolefinharze, Polystyrolharze, Polysulfonharze, Polyvinylharze, Polyamidharze, wobei das eingesetzte Harz ein Polymer oder ein Mischpolymerisat dieser Familien mit oxydierbaren freien Doppelbindungen ist.

5. Verfahren gemäß einem der Ansprüche 1, 2, 3 oder 4, dadurch gekennzeichnet, daß man einen Zusatzstoff wählt, der aus einem wasserlöslichen Mineralsalz besteht, und zwar im Hinblick auf das Schaffen einer oberflächlichen Mikroporosität der Granulate durch das Auflösen der Körner dieses Salzes, die sich an der Oberfläche befinden, bei einer späteren Berührung mit einer wäßrigen Phase.

6. Verfahren gemäß einem der Ansprüche 1, 2, 3 oder 4, dadurch gekennzeichnet, daß man einen Zusatzstoff wählt, der aus einem wasserunlöslichen Produkt besteht, das chemisch angegriffen werden kann, und dadurch, daß man die Granulate einer chemischen Oberflächenbehandlung unterzieht, die dazu geeignet ist, den vorerwähnten Zusatzstoff im Hinblick auf das Schaffen einer oberflächlichen Mikroporosität anzugreifen.

7. Verfahren gemäß Anspruch 6, dadurch gekennzeichnet, daß man, als Zusatzstoff, Kalziumkarbonat oder ein Silikat wählt und daß man die Granulate einem Säureangriff unterzieht.

8. Verfahren gemäß einem der Ansprüche 1, 2, 3, 4, 5, 6 oder 7, bei dem die Oxydation der Granulate bis zu einem Oxydationsgrad geführt wird, der einer Hydrophilie entspricht, die durch einen Berührungswinkel des Materials gegenüber dem Wasser in der Gegenwart von Luft gekennzeichnet ist, der 40° unterschreitet.

9. Verfahren gemäß Anspruch 8, dadurch gekennzeichnet, daß die Oxydation an der Oberfläche darin besteht, daß die Granulate in Berührung mit einem Chromschwefelsäuregemisch oder einem sulfonierenden Oleumgemisch gebracht werden.

10. Verfahren gemäß einem der Ansprüche 1 bis 9, dadurch gekennzeichnet, daß der Zusatzstoff in einer Korngröße mit engem Spektrum zwischen 10 und 100 Mikron gewählt wird, und mit einer Dichte –da– wie :

$$2,2d\text{-}1,2dr \leq da \leq 50d\text{-}49dr.$$

11. Verfahren gemäß Anspruch 1, zur Herstellung eines körnigen Materials im Hinblick auf eine biologische oder physikalisch/chemische Behandlung von Wasser, wobei :

- der Zusatzstoff entsprechend einem der Ansprüche 5, 6 oder 7 gewählt wird und die Granulate anschließend in Berührung mit einer wäßrigen Phase gebracht oder einem Säureangriff unterzogen werden, um die vorerwähnte oberflächliche Mikroporosität zu schaffen ;
- die Oxydation an der Oberfläche entsprechend einem der Ansprüche 8 oder 9, nach dem Erzielen der vorerwähnten Mikroporosität durchgeführt wird ; ·

• die abschließende Behandlung mit ionischer Einpflanzung entsprechend einem der Ansprüche 2 oder 3, nach der Oxydation durchgeführt wird.

12. Verfahren gemäß Anspruch 11, zur Herstellung eines körnigen Materials im Hinblick auf eine biologische Behandlung im Fließbett, wobei man die Dichte –d– und die Größe –t– der Granulate jeweils in den folgenden Bereichen einstellt :

$$1{,}05 \leq d \leq 1{,}2 \text{ und } 1{,}5 \text{ mm} \leq t \leq 3 \text{ mm}.$$

13. Verfahren gemäß Anspruch 11, zur Herstellung eines körnigen Materials im Hinblick auf eine biologische Behandlung, die durch das Suspendieren des Granulates in der wäßrigen Phase bewerkstelligt wird, wobei man die Dichte –d– und die Größe –t– der Granulate jeweils in den folgenden Bereichen einstellt :

$$1{,}01 \leq d \leq 1{,}05 \text{ und } 1{,}5 \text{ mm} \leq t \leq 3 \text{ mm}.$$

14. Verfahren gemäß Anspruch 11, zur Herstellung eines körnigen Materials im Hinblick auf eine biologische Behandlung im Tauchfestbett, wobei man die Dichte –d– und die Größe –t– der Granulate jeweils so einstellt, daß :

$$d > 1{,}1 \text{ und } t \geq 3 \text{ mm}.$$

15. Verfahren gemäß Anspruch 11, zur Herstellung eines körnigen Materials im Hinblick auf eine Wasserfilterung im Festbett mit Durchdringung, wobei man die Dichte –d– und die Größe –t– der Granulate jeweils so einstellt, daß :

$$d \geq 1{,}1 \text{ und } 0{,}5 \text{ mm} \leq t \leq 3 \text{ mm}.$$

16. Körniges Material zur Behandlung von Wasser in der Gestalt kugelförmiger Granulate, mit einer Dichte -d- und einer Größe –t– so, daß $1 < d \leq 3$ und $0{,}5 \text{ mm} \leq t \leq 10 \text{ mm}$, und wobei :

• jedes kugelförmige Granulat aus einer thermoplastischen polymeren Matrize (1) und einem dichteren Zusatzstoff in der Gestalt von Mikrokörnern (3) besteht, die in der vorerwähnten Matrize verstreut sind ;

• jedes Granulat an der Oberfläche eine Porosität in der Gestalt von Mikrozellen (4) aufzeigt, wobei jede eine Größe hat, die der Größe von zumindest einem Mikrokorn Zusatzstoff entspricht ;

• jedes Granulat kationische wasseranziehende Stellen (6) aufzeigt, die über seine Oberfläche verteilt sind.

**Claims**

1. Process for the fabrication of granular material for water treatment that allows for obtaining granules of density –d– and of size –t– adjustable independently in ranges of, respectively, $1 < d \leq 3$ and $0.5 \text{ mm} \leq t \leq 10 \text{ mm}$, in view of allowing for adapting the aforesaid granules to the type of treatment for which the aforesaid material is designed, with the fabrication process characterized in that it consists in :

• blending an oxidable thermoplastic resin of density –dr– lower than –d– with an adjuvant in the form of powder with a granular size of less than 200 microns and with a density –da– such that da $> 1.7d-0.7dr$, with the mixture made so that the weight ratio of adjuvant pa in the mixture is such that $pa = \dfrac{da(d - dr)}{d(da - dr)}$ ;

• heating the mixture to make it plastic ;

• extruding the aforesaid plastic mixture through an extruding head so as to produce plastic rods that display a diameter slightly larger than t ;

• cutting these rods at the outlet of the extruding head so as to obtain plastic sections of a length approximately equal to the diameter ;

• ensuring a soaking of the aforesaid plastic sections in such a manner as to bring about, under the effect of the cooling and of the shrinkages, the pearling of the aforesaid sections which provides them with the shape of spheroid granules ;

• causing the oxidation of the aforesaid spheroid granules, so designed as to create hydrophilic spots at their surface, in view of providing the aforesaid granules with a preferential wettability in relation to water as compared to air.

2. Process according to claim 1, characterized in that we subject the spheroid granules to a final treatment that consists in grafting a cationic type polyelectrolyte ionically to the surface of the aforesaid granules.

3. Process according to claim 2, characterized in that the final treatment consists in bringing the granules into contact with an aqueous solution that contains a polyelectrolyte of the following group : iminopolyethylene hydrochloride, ammonium polyvinyl hydrochloride, aluminium polychloride.

4. Process according to one of the claims 1, 2 or 3, where the oxidable thermoplastic resin is being chosen from among the following families : polyolefin resins, polystyrene resins, polysulphone resins, polyvinyl resins, polyamide resins, with the resin used being a polymer or copolymer of these families, displaying oxidable free double bonds.

5. Process according to one of the claims 1, 2, 3 or 4, characterized in that we choose an adjuvant that consists of a mineral salt soluble in water, in view of creating a superficial microporosity of the granules through the dissolution of the grains of this salt located at the surface, when brought into contact later with an aqueous phase.

6. Process according to one of the claims 1, 2, 3 or 4, characterized in that we choose an adjuvant that consists of a product insoluble in water and liable to be attacked chemically, and in that we subject the granules to a superficial chemical treatment capable of attacking the aforesaid adjuvant in view of creating a microporosity at the surface.

7. Process according to claim 6, characterized in that we choose, as an adjuvant, calcium carbonate or a silicate and that we subject the granules to an acid attack.

8. Process according to one of the claims 1, 2, 3, 4, 5, 6 or 7, where the oxidation of the granules is carried up to a degree of oxidation that corresponds with a hydrophyly characterized by an angle of contact of less than 40° of the material in relation to the water, in the presence of air.

9. Process according to claim 8, characterized in that the surface oxidation consists in bringing the granules into contact with a sulphochromic mixture or a sulphonating oleum mixture.

10. Process according to one of the claims 1 to 9, characterized in that the adjuvant is chosen with a granular size in a narrow spectrum comprised between 10 and 100 microns and of a density –da– such that :

$$2.2d\text{-}1.2dr \leq da \leq 50d\text{-}49dr.$$

11. Process according to claim 1, for the fabrication of a granular material for biological or physico-chemical water treatment where :
- the adjuvant is chosen according to one of the claims 5, 6 or 7, with the granules subsequently brought into contact with an aqueous phase or subjected to an acid attack in view of creating the aforesaid superficial microporosity ;
- the surface oxidation according to one of the claims 8 or 9 is being performed after the aforesaid microporosity has been obtained ;
- the ionic grafting final treatment according to one of the claims 2 or 3 is being performed subsequent to oxidation.

12. Process according to claim 11, for the fabrication of a granular material in view of a fluidized bed biological treatment where we adjust density –d– and size –t– of the granules in the following ranges, respectively :

$$1.05 \leq d \leq 1.2 \text{ and } 1.5 \text{ mm} \leq t \leq 3 \text{ mm.}$$

13. Process according to claim 11, for the fabrication of a granular material in view of a biological treatment carried out via the suspension of the granule in the aqueous phase where we adjust the density –d– and the size –t– of the granules in the following ranges, respectively :

$$1.01 \leq d \leq 1.05 \text{ and } 1.5 \text{ mm} \leq t \leq 3 \text{ mm.}$$

14. Process according to claim 11, for the fabrication of a granular material in view of an immersed fixed bed biological treatment where we adjust density –d– and size –t– of the granules so that, respectively :

$$d > 1.1 \text{ and } t \geq 3 \text{ mm.}$$

15. Process according to claim 11, for the fabrication of a granular material in view of penetration fixed bed water filtering where we adjust density –d– and size –t– of the granules, respectively, so that :

$$d > 1.1 \text{ and } 0.5 \text{ mm} \leq t \leq 3 \text{ mm.}$$

16. Granular material for water treatment in the form of spheroid granules of density –d– and of size –t– such that :

$$1 < d \leq 3 \text{ and } 0.5 \text{ mm} \leq t < 10 \text{ mm, where :}$$

- each spheroid granule consists of a thermoplastic polymeric matrix (1) an of an adjuvant of greater density in the form of micrograins (3) dispersed in the aforesaid matrix ;
- each granule displays at its surface a porosity in the form of microcells (4), each of a size that corresponds, at least, to that of one micrograin of adjuvant ;
- each granule displays cationic hydrophilic spots (6) distributed over its surface.

## Fig.1

## Fig. 2

Fig. 3

Fig. 4

Fig. 5